# EUROPEAN PATENT SPECIFICATION

(11) **EP 2 252 660 B1**
(45) Date of publication and mention of the grant of the patent: **18.05.2016**
(21) Application number: 09709931.1
(22) Date of filing: 06.02.2009
(51) Int. Cl.: C09C 1/28, C09C 1/40, C09C 1/42, B41M 5/52, C09C 1/00, C08L 9/08, D21H 19/38, D21H 19/40

(54) **IMPROVED KAOLIN CLAY PIGMENTS**
VERBESSERTE KAOLINTONPIGMENTE
PIGMENTS DE KAOLIN AMÉLIORÉS

(30) Priority: 11.02.2008 US 69483
(43) Date of publication of application: 24.11.2010
(73) Proprietor: THIELE KAOLIN COMPANY, Sandersville, GA 31082 (US)
(72) Inventor: ZHANG, Zhenzhong, Watkinsville, Georgia 30677 (US)
(74) Representative: MacLachlan & Donaldson
(86) International application number: PCT/US2009/000788
(87) International publication number: WO 2009/102410

(56) References cited:
- EP-A2- 0 377 283
- WO-A1-01/55793
- US-A- 5 236 989
- US-A- 5 236 989
- US-B2- 6 610 136
- US-B2- 7 285 182

## Description

### TECHNICAL FIELD

This invention relates to kaolin clay pigments which have high brightness, high opacifying and high bulking properties. In a more specific aspect, this invention relates to kaolin clay pigments which contain gypsum. This invention also relates to a process for the manufacture of gypsum-containing kaolin clay pigments and to coating compositions which comprise gypsum-containing kaolin clay pigments, whereby such coating compositions provide high brightness, high opacifying and high bulking properties to coated sheets.

### BACKGROUND OF THE INVENTION

Papermakers conventionally apply coatings to improve the appearance and performance of their paper products, including brightness, gloss, smoothness, opacity and printability. Three main types of mineral pigments have been widely used in coatings in the paper industry: kaolin clays, calcium carbonates and titanium dioxides. Each type of mineral pigment has its own characteristic properties and brings certain benefits to the paper coatings.

Kaolin clay pigments have been used widely by the paper industry for many years. The most common and important kaolin mineral for the paper industry is kaolinite, a hydrous aluminosilicate with a theoretical composition of [Al₂Si₂O₅(OH)₄]. The kaolinite structure is composed of a single silicate tetrahedral sheet and a single alumina octahedral sheet arranged so that the tips of the silicate tetrahedrons and one of the layers of alumina octahedral sheet share a common plane. Electron micrographs of well-crystallized kaolinite show hexagonal shaped platy particles, while poorly crystallized kaolinite occurs in less distinct hexagonal shaped particles.

Like other natural minerals, kaolin clays contain some minor impurities, such as TiO₂ and Fe₂O₃, and kaolin clays which contain these impurities generally have a low brightness and an undesirable color. The kaolin industry uses various beneficiation processes to improve the brightness and color of their kaolin products. Because of its unique structure and platy particle shape, kaolin clays are widely used to improve runnability of coating formulations and to enhance brightness, gloss, smoothness and printability of a coated sheet.

In recent years, ground calcium carbonate (GCC) and precipitated calcium carbonate (PCC) pigments are finding increasing use by the paper industry. Both GCC and PCC pigments have high brightness and desirable color (blue tint), which also translate into high brightness of coated sheets. However, both GCC and PCC yield lower coated sheet gloss and inferior printing performance as compared to kaolin clays.

The unique platy shape of kaolin particles enhances coated sheet gloss, smoothness and printability. However, the platy hydrous kaolin particles tend to yield a tight packing structure that is not generally effective for light scattering. To improve light scattering and opacity of the coated sheet, papermakers typically add TiO₂ pigments to their coating formulations. Titanium dioxides are highly effective for light scattering because of their high refractive index values (anatase 2.53 and rutile 2.73). However, both forms of TiO₂ are expensive pigments.

The kaolin clay industry has developed various technologies for structuring kaolin clays to enhance their light scattering properties. These include:
(1) Engineered pigments produced by mechanically modifying particle size in the entire size distribution range. This is generally achieved using multiple centrifugation steps. Typically, an engineered clay is made by producing a fine fraction from a particular crude blend. Then the ultrafine particle level is reduced by a second centrifugation.
   For example, U. S. Patent No. 5,168,083 discloses a method of producing a high opacity kaolin pigment by defining an aqueous kaolin slurry via centrifugation to remove a substantial portion of colloidal particles. Prior to the defining step, the aqueous kaolin slurry is mechanically dispersed, ground to break up agglomerates and centrifuged to remove large kaolin particles. The resulting pigments with a narrow particle size distribution yield a coating with special packing characteristics that yield high porosity. Such a coating is more efficient in light scattering and, therefore, provides improved brightness and opacity to a coated sheet.
   The engineered pigments generally perform well in paper coating applications; however, the high production cost and low recovery rate from clay crudes limit their use to high end specialty grades only.
(2) Chemically structured pigments produced by aggregating the kaolin particles through the use of various organic polymers. As disclosed in U. S. Patent No. 4,738,726, a high bulking opacifying pigment is produced by flocculating hydrous kaolin particles with a minor amount of a cationic polyelectrolyte flocculant, such as a quaternary ammonium polymer salt. There are some limited successes in these technologies for certain specialty grades. This approach is based on the idea to establish and stabilize an open structure for the pigments.
   In most cases, the chemically structured pigments have not delivered the promised result for paper coating applications, as the open structure of the pigments tends to be partially destroyed during coating application under vigorous high shear conditions.
(3) Chemically structured pigments produced by aggregating the kaolin particles through the use of various inorganic compounds. U.S. Patent No. 4,640,716 teaches the art of using a zirconium ion, such as ammonium zirconium carbonate, to enhance optical properties of the pigment. Maxwell and Malla U.S. Patent No. 5,584,925 teaches the art of using phosphate compounds to improve the light scattering (opacity), gloss and ink receptivity of the pigment.
   U.S. Patent 5,690,728 teaches the art of using poly aluminum chloride to produce chemically aggregated pigment. D.I. Lee, "Coating Structure Modifications and Coating Hold-out Mechanisms", 1981 TAPPI Coating Conference, teaches a method for flocculating clay particles using various electrolytes that result in more porous coatings with higher brightness and lower gloss.
(4) Chemically structured pigments produced by aggregating the kaolin particles through the use of inorganic compounds combined with an organic polymer. U.S. Patent No. 5,068,276 teaches the art of forming bulked aggregates of mineral particles by adding a polyvalent cation to flocculate the mineral particles and adding polyacrylic acid to cross-link with the polyvalent cation and to cause in situ precipitation of polyacrylate salt on the mineral particle flocs.
(5) Thermally structured pigments by calcining fine particle size hard kaolin (gray kaolin) crudes. This technology (described in U.S. Patent No. 3,588,523) has achieved success in paper filling as well as in paper coating applications.

Many major kaolin producers produce one or more calcined grades. These calcined products have high brightness and excellent light-scattering properties, and they are widely used by paper makers as an extender or as a replacement for the more expensive TiO₂ pigments. Some of these calcined kaolin pigments, such as the product marketed by Thiele Kaolin Company under the trademark Kaocal, also bring additional benefits to the coated sheet and are used in various proprietary grades and specialty products by papermakers. However, the calcined pigments have some negative attributes, such as abrasiveness and dilatancy (poorer Hercules viscosity) as compared to hydrous kaolin pigments.

Consequently, there is a need in the industry for a kaolin clay pigment which will provide high brightness, high opacity and high bulking to a coated sheet.

US 5,236,989 discloses a process for forming chemically aggregated composite porous bulking pigments for use in paper filling and coating formulations in which an aqueous slurry is formed of feed mineral particles selected from one or more members of the group consisting of kaolin, calcium carbonate, titanium dioxide, gypsum, and mica.

WO 01/55793 discloses a method for producing printed products in which a paper or board is used the printing surface of which has a pigment-containing coating layer in which at least 20 % of the pigment is made up of a hydrous pigment, such as gypsum, or in which at least 20 % of the filler is made up of a hydrous filler, such as gypsum.

EP 0377283 discloses a process for preparing an aqueous suspension containing at least 50% by weight of a mixed pigment comprising calcium sulphate and a second pigment.

### SUMMARY OF THE INVENTION

Briefly described, the present invention provides pigments which contain kaolin clay and a minor amount of gypsum (sometimes referred to as calcium sulfate). The present invention also provides coating compositions which contain kaolin clay and a minor amount of gypsum. These gypsum-containing kaolin clay pigments and coating compositions provide high brightness, high opacifying and high bulking properties to coated sheets.

The present invention also provides a process for the manufacture of these gypsum-containing kaolin clay pigments and coating compositions.

These and other features and advantages of this invention will become apparent from the following detailed description.

### DETAILED DESCRIPTION OF THE INVENTION

In accordance with the present invention a high brightness, high opacifying, high bulking pigment is provided which is comprised of kaolin clay and a minor amount of gypsum. By the term "minor amount", gypsum is present in an amount from about 0.1 to 1.0 weight percent, based on the weight of the dry pigment.

The pigment of this invention contains kaolin clay which can be in several forms, examples of which include hydrous kaolin clay, calcined kaolin clay and mixtures thereof.

Optionally, in this invention, other pigments can be used in combination with the kaolin clay of this invention. Examples of such other pigments include ground calcium carbonate, precipitated calcium carbonate, titanium dioxide, talc and a mixture of two or more of these pigments.

The present invention provides a method for making such novel pigments through precise control of the dosage of gypsum. The appropriate range of gypsum in the novel pigments is narrow and highly critical. A dosage below the critical level does not yield the desirable performance, whereas a dosage above the critical level results in pigments with extremely high Brookfield viscosity, low percent solids or both.

Gypsum has previously been used in paper coating compositions containing kaolin clay and calcium carbonate (Hofmann et al. Vol. 73, December 1990 TAPPI Journal, pp. 139-147; Lehtinen, Chapter 10, "Pigment Coating and Surface Sizing of Paper", 2000). For those studies, however, large amounts of gypsum (about 40 to about 80 percent by weight) were used in the coating compositions.

Those skilled in the art know that gypsum has a modest solubility in water (∼2.5 g/L as dihydrate), and that the solubility is practically independent of pH and temperature between 0 and 100° Celsius. Also known is that the viscosity of a kaolin clay slurry is extremely sensitive to the calcium ion and that an intense rise in viscosity and worse yet, solidification of the slurry (shock) can occur when a small amount of gypsum is added to the clay slurry ("The Essential Guide to Aqueous Coatings of Paper and Board", edited by Dean, 1997, p. 3.41). Thus, the dissolved calcium ions (Ca²⁺) from gypsum make gypsum incompatible with other coating pigments, such as kaolin. For the above reason, the gypsum and kaolin slurries are required to be kept separate before they are blended. Lehtinen (2000, above) suggests the following sequence: gypsum is added first, followed by binders and other additives and finally kaolin is added toward the end of preparation of the coating composition.

To those skilled in the art, chemical structuring of kaolin clays is a process of controlled flocculation and aggregation. Although we suspected that calcium ions from dissolved gypsum might help to provide a loosely packed structure and thus result in a modest improvement in coated sheet properties, we were surprised with the performance obtained.

When minor amounts of gypsum were added to kaolin clay pigments, kaolin/GCC pigments and kaolin/PCC pigments, and coating colors containing these pigments were evaluated in several CLC coating studies, we observed significant improvements in both coated sheet brightness and opacity, while other critical coated sheet and print properties, including sheet gloss were maintained.

We believe that the dissolved Ca²⁺ ions from gypsum help to flocculate the particles of kaolin and other pigments and thus facilitate the formation of an open packing structure. We further believe that the in-situ precipitation of gypsum and its transformation to bassanite during the drying of coatings likely provide a "glue" to cement and stabilize the open structure of flocculated clay particles. The combined "structuring" effect of the calcium ions and the "binding" effect of in situ precipitation of gypsum and its transformation to bassanite during the drying process are believed to be the mechanisms for the significant improvement in optical and printing properties of a coated sheet.

In a typical procedure for the production of high brightness, high opacifying and high bulking kaolin pigments, a kaolin clay slurry is prepared, classified and beneficiated through various processes such as magnetic separation, flotation, selective flocculation, leaching and filtration or combinations of the above. The slurry is then mixed with gypsum to initiate a controlled flocculation of the kaolin clay. The slurry pigment is then ready for paper coating or board coating applications.

We also found that gypsum can be used as a coating additive to enhance brightness, opacity and coverage of the coated sheet. A typical coating formulation is composed of three components: (1) pigments, (2) binders and (3) functional additives. Paper coating provides fiber coverage, gloss, opacity and gives a bright, uniform and smooth surface which yields an improved image after printing that is appealing to the human eye. Pigments are the primary ingredients for coverage, brightness, opacity, gloss, smoothness and print quality. The most common pigments include kaolin clay, ground calcium carbonate, precipitated calcium carbonate, TiO₂ and talc. Binders are the essential ingredients for holding or gluing the coating pigments as well as to the base paper. There are two types of binders: natural binders such as starch and protein, and synthetic binders such as water soluble polymers (polyvinyl alcohol and alkali soluble emulsions) and latexes (styrene butadiene, styrene acrylonitrite, polyvinyl acetate and acrylates such as styrene acrylate).

In addition to enhancing the strength of the coating, the choice and amount of binder also impact the coating structure, gloss and print performance. Additives perform specialized functions. The common additives used include crosslinkers, viscosity modifiers, defoamers, water retention agents, lubricants, dyes and optical whitening agents. In this invention, we have shown that gypsum can be used as coating additive for improving brightness, opacity and coverage.

Gypsum structured pigments and gypsum as a coating additive according to the invention have several advantages as compared to other types of opacifying and bulking pigments. Gypsum is a natural mineral which is not flammable, corrosive or toxic. The resulting opacifying and bulking pigments or coating colors are not shear sensitive; that is, they retain their opacifying power when applied under high shear.

We believe that calcium ions (Ca²⁺) from other soluble salts of calcium (such as calcium nitrate and calcium chloride) may be used to achieve controlled flocculation of the above pigments and coating colors, and the in-situ precipitation of gypsum may be employed as well. Furthermore, we believe that the in-situ precipitation reaction can be used to aggregate and bulk particles of other minerals, including kaolin, ground calcium carbonate, precipitated calcium carbonate, talc, TiO₂, and combinations or blends of these pigments and coating colors.

The present invention is further illustrated by the following examples which are illustrative of certain embodiments designed to teach those of ordinary skill in the art how to practice this invention and to represent the best mode contemplated for carrying out this invention.

For the following Examples, the following terms shall be defined as follows:
"Kaowhite S", is a trademark for a delaminated kaolin clay product marketed by Thiele Kaolin Company of Sandersville, Georgia; also referred to in this application as "KWS".
"Kaocal" is a trademark for a calcined kaolin clay product marketed by Thiele Kaolin Company.
"CLC" refers to a cylindrical laboratory coater from Sensor & Simulation Products.
"LWC" refers to a light weight coating study.
"Kaomax HG" is a trademark for a high brightness engineered delaminated kaolin clay product marketed by Thiele Kaolin Company.
"Covercarb" is a trademark for an engineered ground calcium product marketed by OMYA, Inc.
"CMC" refers to carboxymethyl cellulose.
"RSV" refers to relative sediment volume.
"KM" refers to Kubelka-Munk.

### EXAMPLE 1

### Gypsum as a Structuring Agent Evaluated in an LWC Offset Coating Study

In this Example, a delaminated kaolin clay product (marketed as Kaowhite S by Thiele Kaolin Company of Sandersville, Georgia) was structured with gypsum at two dosages (0.20% and 0.25%, based on the weight of the dry clay). These two pigments were evaluated in a LWC study on a base stock of 12.25 kg/306.6 m² (27 lbs/3300 ft²) using a CLC at a target coat weight of 2.27 kg/306.6 m² (5 lbs/3300 ft²). For comparison, a 100% Kaowhite S kaolin clay pigment (KWS), and a KWS/TiO₂ blend pigment (97.5/2.5) were also evaluated. DuPont RPS Vantage rutile TiO₂ was used in the blend pigment. Coating colors were prepared by mixing each of the above pigments with the following ingredients: Binders - 6 parts hydroxyl ethylated starch and 11 parts styrene butadiene latex. Additives - 0.1 parts sodium polyacrylate dispersant, 0.67 parts cyclic amide aldehyde condensation product insolubilizer, and 1 part calcium stearate emulsion lubricant. The coated sheets were super-calendared 2 passes at 62. 8 °C (145 °F), 682.6 kPa (99 pounds per linear inch), prior to final evaluation. Optical properties of the coated sheets are reported in Table 1.

**Table 1**

| Sample Description | KWS 100% | KWS/TiO₂ 97.5/2.5 | Gypsum Structured KWS | |
|---|---|---|---|---|
| Gypsum Dosage % | 0 | 0 | 0.20 | 0.25 |
| Coating Color Solids % | 58.3 | 58.3 | 54.2 | 52.3 |
| Coat Weight 0.45 kg/306.6 m² (lb/3300 ft²) | 5.0 | 4.8 | 4.7 | 5.0 |
| Gloss % | 49 | 46 | 49 | 50 |
| Brightness, GE % | 68.8 | 70.0 | 69.9 | 70.7 |
| Brightness, Diffuse % | 67.6 | 68.9 | 68.7 | 68.9 |
| Opacity % | 84.3 | 85.3 | 85.2 | 85.3 |

The data in Table 1 show that KWS structured with 0.20% and 0.25% gypsum resulted in a significant increase in coated sheet brightness and opacity as compared to the unstructured KWS pigment, while the sheet gloss is maintained. Surprisingly, gypsum as a structuring agent at these low dosages matched the performance of the KWS/TiO₂ (97.5/2.5) blend. However, gypsum structured KWS pigments reduced coating color solids by 4 to 6%.

### EXAMPLE 2

### Gypsum as a Structuring Agent Evaluated in an LWC Rotogravure Coating Study

In this Example, Kaowhite S was structured with gypsum at two dosages (0.20% and 0.25%, based on the weight of the dry clay). These two pigments were evaluated in a CLC/LWC rotogravure coating study. For comparison, a 100% KWS pigment was also evaluated. Coating colors were prepared by mixing each of the above pigments with the following ingredients: Binder - 6 parts carboxylated styrene butadiene rubber latex. Additives - 0.1 parts sodium polyacrylate dispersant, 1 part calcium stearate emulsion lubricant and 0.2 parts hydrophobically modified alkali swellable emulsion polymers thickener. The coating was applied on a base stock of 12.25 kg/306.6 m² (27 lbs/3300 ft² ) at a target coat weight of 2.49 kg/306.6 m² (5.5 lbs/3300 ft²) . The coated sheets were calendared 2 passes at 62.2 °C (140 °F), 682.6 kPa (99 pounds per linear inch), prior to final evaluation. Optical and print properties of the coated sheets are reported in Table 2.

Rotogravure printability was measured using the Heliotest total number of missing dots method. The Heliotest is an attachment for the IGT print tester and consists of an engraved disc with half-tone and printed line pattern, doctor blade system and a special ink. The print (110 mm in length and 7 mm in width) was made on the test paper, which is held against the printing wheel of an IGT print tester at constant force. The printability is measured in terms of length of print until 20 missing dots occur. The longer the distance from the beginning of printing to the 20^{th} missing dot, the better the printability.

The data in Table 2 show that KWS structured with 0.20% and 0.25% gypsum provided improvement in coated sheet brightness, opacity and rotogravure printability as compared to the unstructured KWS. Again, the gypsum structured KWS pigments decreased coating color solids by 1 to 3%.

**Table 2**

| Sample Description | KWS 100% | Gypsum Structured KWS | |
|---|---|---|---|
| Gypsum Dosage % | 0 | 0.20 | 0.25 |
| Coating Color Solids % | 59.4 | 58.4 | 56.0 |
| Coat Weight 0.45 kg/306.6 m² (lb/3300 ft²) | 5.3 | 5.3 | 5.5 |
| Gloss % | 49 | 47 | 53 |
| Brightness, GE % | 69.7 | 70.6 | 72.2 |
| Brightness, Diffuse % | 69.1 | 70.2 | 71.8 |
| Opacity % | 87.0 | 87.3 | 88.8 |
| Printability Length of print to 20^{th} missing dots mm | 42 | 56 | 71 |

### EXAMPLE 3

### Gypsum as a Coating Additive in an LWC Offset Coating Application

In this Example, gypsum was used as a coating additive in a Kaowhite S based coating formulation at two levels (0.20 and 0.25 parts, based on the weight of the dry clay). For comparison, a 100% KWS pigment and a gypsum structured KWS pigment at the same dosages (0.20% and 0.25%) were also evaluated. Optical properties of the coated sheets are reported in Table 3.

**Table 3**

| Sample Description | KWS | Gypsum Structured KWS | | KWS with Gypsum as a Coating Additive | |
|---|---|---|---|---|---|
| Gypsum Dosage % | 0 | 0.20 | 0.25 | 0.20 | 0.25 |
| Coating Color Solids % | 59.3 | 54.9 | 52.6 | 58.8 | 58.9 |
| Coat Weight 0.45 kg/306.6 m² (lb/3300 ft²) | 4.6 | 4.9 | 4.8 | 5.0 | 4.7 |
| Gloss % | 52 | 55 | 55 | 57 | 55 |
| Brightness, GE % | 67.8 | 69.1 | 69.2 | 68.7 | 68.5 |
| Brightness, Diffuse % | 67.3 | 68.0 | 68.1 | 68.0 | 67.9 |
| Opacity % | 83.8 | 84.3 | 84.4 | 84.4 | 84.1 |

The data in Table 3 show that gypsum is effective as a coating additive in a delaminated kaolin based coating formulation for an LWC offset application. Gypsum as an additive at the above dosages provided substantial improvements in coated sheet optical properties, while maintaining the coating color solids, as compared to the KWS control. On the other hand, gypsum as a structuring agent at the same dosages yielded higher brightness, but significantly lower coating color solids as compared to the performance of gypsum as an additive.

### EXAMPLE 4

### Gypsum as a Coating Additive for a Carbonate Containing Formulation

In this Example, gypsum was used as a coating additive in a carbonate containing coating formulation for a coated free-sheet application. Coating colors were prepared by mixing a Kaomax HG/Covercarb (60/40) blended pigment with the following ingredients: Binders - 5.5 parts hydroxyethyl starch and 8.5 parts styrene butadiene latex. Additives - 0.22 parts ethylene glycol insolubilizer, 0.5 parts calcium stearate emulsion lubricant, and gypsum at three levels (0.20, 0.25 and 0.30 parts, based on the weight of the dry blend pigment). For comparison, a control coating with no gypsum additive was prepared using the same formulation. Coating was applied on a wood-free base stock of 13.6 kg/306.6 m² (30 lbs/3300 ft²) at a target coat weight of 3.49 kg/306.6 m² (7.7 lbs/3300 ft²). The coated sheets were calendared 2 passes at 76.7°C (170 °F), 1172 kPa (170 pounds per linear inch), prior to final evaluation. Optical properties of the coated sheets are reported in Table 4.

The data in Table 4 show that gypsum is effective as a coating additive in a carbonate containing coating composition for a coated freesheet application. Gypsum when used as an additive at 0.20 to 0.30 parts provided significant improvements in coated sheet opacity and brightness as compared to the control, while maintaining the coating color solids and coated sheet gloss.

**Table 4**

| Sample Description | Kaomax HG/ Covercarb 60/40 | Kaomax HG/Covercarb 60/40 with Gypsum as a Coating Additive | | |
|---|---|---|---|---|
| Gypsum Dosage % | 0 | 0.20 | 0.25 | 0.30 |
| Coating Color Solids % | 59.8 | 59.8 | 59.8 | 59.8 |
| Coat Weight 0.45 kg/306.6 m² (lb/3300 ft²) | 7.7 | 7.6 | 7.8 | 7.8 |
| Gloss % | 65 | 65 | 66 | 66 |
| Brightness, GE % | 84.9 | 85.1 | 85.3 | 85.3 |
| Brightness, Diffuse % | 82.2 | 82.4 | 82.5 | 82.6 |
| Opacity % | 78.8 | 79.4 | 79.6 | 79.7 |

### EXAMPLE 5

### Gypsum as a Bulking Agent for Calcined Kaolin

For thermal paper coating applications, a high bulk pigment is preferred. The bulkiness of a pigment can be measured using the relative sediment volume technique (RSV, the ratio between the sediment volume, which is the sum of solid volume and void volume, and the solid volume) as described by Robinson (Vol. 42, June 1959 TAPPI Journal, p. 432-438). Clearly, for a given pigment, the higher the RSV, the higher the void volume, the bulkier the pigment.

In this Example, gypsum was added to Kaocal clay at 0.25, 0.275 and 0.30%, replacing 0.10% carboxymethyl cellulose (CMC) as a suspension agent. The Kaocal clay slurry samples were made down using a laboratory dispersator from Premier Mill Corporation. Slurry solids content, pH, Brookfield and Hercules viscosity, RSV and Kubelka-Munk (KM) scattering coefficients were measured and are presented in Table 5.

**Table 5**

| Sample | CMC | Gypsum | | |
|---|---|---|---|---|
| Dosage % | 0.10 | 0.25 | 0.275 | 0.30 |
| Solids % | 50.0 | 50.2 | 50.0 | 50.1 |
| pH | 6.0 | 6.3 | 6.2 | 6.2 |
| Brookfield cP | 194 | 34 | 136 | 264 |
| Hercules rpm@18 Dynes | 1696 | 296 | 260 | 225 |
| RSV | 2.60 | 2.74 | 2.89 | 2.94 |
| KM | | | | |
| @457 nm | 1.08 | 1.09 | 1.07 | 1.06 |
| @550 nm | 0.89 | 0.89 | 0.85 | 0.85 |

The data in Table 5 show that the RSV of the Kaocal clay slurry samples increased significantly when gypsum was added at 0.25 to 0.30%, suggesting a potential benefit for thermal paper applications.

This invention has been described in detail with particular reference to certain embodiments, but variations and modifications can be made without departing from the spirit and scope of the invention as defined in the following claims.

## Claims

1. A high brightness, high opacifying, high bulking pigment which is comprised of kaolin clay and a minor amount of gypsum, wherein the amount of gypsum is from 0.1 to 1.0 weight percent based on the weight of the dry pigment;
optionally wherein the kaolin clay is any one of the following:
hydrous kaolin clay;
calcined kaolin clay; or
a blend of hydrous kaolin clay and calcined kaolin clay.

2. A pigment is defined by Claim 1 which additionally comprises calcium carbonate, titanium dioxide, talc or a mixture of two or more of these materials;
optionally wherein the calcium carbonate is ground calcium carbonate or precipitated calcium carbonate.

3. A pigment as defined by Claim 1;
wherein the amount of gypsum is from 0.15 to 0.5 weight percent based on the weight of the dry pigment;
optionally wherein the amount of gypsum is from 0.2 to 0.3 weight percent based on the weight of the dry pigment.

4. A paper coating composition which comprises a kaolin clay pigment, a minor amount of gypsum and at least one binding material, wherein the amount of gypsum is from 0.1 to 1.0 weight percent based on the weight of the dry pigment;
optionally wherein the pigment is comprised of any one of the following:
hydrous kaolin clay;
calcined kaolin clay; or
a blend of hydrous kaolin clay and calcined kaolin clay.

5. A paper coating composition as defined by Claim 4 which additionally comprises calcium carbonate, titanium dioxide, talc or a mixture of two or more of these materials;
optionally wherein the calcium carbonate is ground calcium carbonate or precipitated calcium carbonate.

6. A paper coating composition as defined by Claim 4 wherein the amount of gypsum is from 0.15 to 0.5 weight percent based on the weight of the dry pigment;
optionally wherein the amount of gypsum is from 0.2 to 0.3 based on the weight of the dry pigment.

7. A paper coating composition as defined by Claim 4 wherein the binding material is a starch, protein, water soluble polymer, latex or a mixture of two or more of these materials.

8. A paper coating composition as defined by Claim 7 wherein the binding material is polyvinyl alcohol, styrene butadiene latex, polyvinyl acetate, styrene acrylate, styrene acrylonitrile or a mixture of two or more of these materials.

9. A process for making a high brightness, high opacifying, high bulking pigment as claimed in claim 1, wherein the process comprises adding a minor amount of gypsum to kaolin clay, wherein the amount of gypsum is from 0.1 to 1.0 weight percent based on the weight of the dry pigment.

10. A process as defined by Claim 9 wherein the amount of gypsum is from 0.15 to 0.5 weight percent based on the weight of the dry pigment; optionally wherein the amount of gypsum is from 0.2 to 0.3 weight percent based on the weight of the dry pigment.

11. A process as defined by Claim 9 wherein the pigment additionally comprises calcium carbonate, titanium dioxide, talc or a mixture of two or more of these materials;
optionally wherein the calcium carbonate is ground calcium carbonate or precipitated calcium carbonate.

12. A process for producing a paper coating composition as claimed in claim 4, wherein the process comprises mixing a minor amount of gypsum, a kaolin clay pigment and at least one binding material, wherein the amount of gypsum is from about 0.1 to about 1.0 weight percent based on the weight of the dry pigment.

13. A process as defined by Claim 12 wherein the paper coating composition additionally comprises calcium carbonate, titanium dioxide, talc or a mixture of two or more of the materials;
optionally wherein the calcium carbonate is ground calcium carbonate or precipitated calcium carbonate.

14. A process as defined by Claim 12 wherein the amount of gypsum is from 0.15 to 0.5 weight percent based on the weight of the dry pigment; optionally wherein the amount of gypsum is from 0.2 to 0.3 weight percent based on the weight of the dry pigment.

15. A paper coated with a coating composition as claimed in claim 4.

16. A coated paper as defined by Claim 15 wherein the coating composition additionally comprises calcium carbonate, titanium dioxide, talc or a mixture of two or more of these materials;
optionally wherein the calcium carbonate is ground calcium carbonate or precipitated calcium carbonate.

17. The coated paper as claimed in Claim 15;
wherein the amount of gypsum in the coating composition is from 0.15 to 0.5 weight percent based on the weight of the dry pigment; optionally wherein the amount of gypsum is from 0.2 to 0.3 weight percent based on the weight of the dry pigment.

## Patentansprüche

1. Stark deckendes, stark aufbauschendes Pigment mit hoher Helligkeit, das aus Kaolintonerde und einer geringen Menge an Gips besteht, wobei die Menge an Gips 0,1 bis 1,0 Gewichtsprozent auf Basis des Gewichts des Trockenpigments beträgt;
optional wobei die Kaolintonerde ein beliebiges des Folgenden ist:
wasserhaltige Kaolintonerde;
kalzinierte Kaolintonerde; oder
eine Vermengung aus wasserhaltiger Kaolintonerde und kalzinierter Kaolintonerde.

2. Pigment nach Anspruch 1, das des Weiteren Calciumcarbonat, Titandioxid, Talk oder eine Mischung von zwei oder mehr dieser Materialien umfasst;
optional wobei das Calciumcarbonat gemahlenes Calciumcarbonat oder präzipitiertes Calciumcarbonat ist.

3. Pigment nach Anspruch 1 ist:
wobei die Menge an Gips 0,15 bis 0,5 Gewichtsprozent auf Basis des Gewichts des Trockenpigments ist;
optional wobei die Menge an Gips 0,2 bis 0,3 Gewichtsprozent auf Basis des Gewichts des Trockenpigments ist.

4. Papierbeschichtungszusammensetzung, die ein Kaolintonerdepigment, eine geringe Menge an Gips und zumindest ein Bindematerial umfasst, wobei die Menge an Gips 0,1 bis 1,0 Gewichtsprozent auf Basis des Gewichts des Trockenpigments beträgt;
optional wobei das Pigment aus einem beliebigen des Folgenden besteht:
wasserfreier Kaolintonerde;
kalzinierter Kaolintonerde; oder
einer Vermengung aus wasserhaltiger Kaolintonerde und kalzinierter Kaolintonerde.

5. Papierbeschichtungszusammensetzung nach Anspruch 4, die des Weiteren Calciumcarbonat, Titandioxid, Talk oder eine Mischung von zwei oder mehr dieser Materialien umfasst;
optional wobei das Calciumcarbonat gemahlenes Calciumcarbonat oder präzipitiertes Calciumcarbonat ist.

6. Papierbeschichtungszusammensetzung nach Anspruch 4, wobei die Menge an Gips 0,15 bis 0,5 Gewichtsprozent auf Basis des Gewichts des Trockenpigments beträgt;
optional wobei die Menge an Gips 0,2 bis 0,3 auf Basis des Gewichts des Trockenpigments beträgt.

7. Papierbeschichtungszusammensetzung nach Anspruch 4, wobei das Bindematerial eine Stärke, Protein, wasserlösliches Polymer, Latex oder eine Mischung von zwei oder mehr dieser Materialien ist.

8. Papierbeschichtungszusammensetzung nach Anspruch 7, wobei das Bindematerial Polyvinylalkohol, Styrolbutadienlatex, Polyvinylacetat, Styrolacrylat, Styrolacrylonitril oder eine Mischung von zwei oder mehr dieser Materialien ist.

9. Verfahren zur Herstellung eines stark deckenden, stark aufbauschenden Pigments mit hoher Helligkeit nach Anspruch 1, wobei das Verfahren das Hinzufügen einer geringen Menge an Gips zu Kaolintonerde umfasst, wobei die Menge an Gips 0,1 bis 1,0 Gewichtsprozent auf Basis des Gewichts des Trockenpigments beträgt.

10. Verfahren nach Anspruch 9, wobei die Menge an Gips 0,15 bis 0,5 Gewichtsprozent auf Basis des Gewichts des Trockenpigments beträgt; optional wobei die Menge an Gips 0,2 bis 0,3 Gewichtsprozent auf Basis des Gewichts des Trockenpigments beträgt.

11. Verfahren nach Anspruch 9, wobei das Pigment des Weiteren Calciumcarbonat, Titandioxid, Talk oder eine Mischung von zwei oder mehr dieser Materialien umfasst;
optional wobei das Calciumcarbonat gemahlenes Calciumcarbonat oder präzipitiertes Calciumcarbonat ist.

12. Verfahren zur Herstellung einer Papierbeschichtungszusammensetzung nach Anspruch 4, wobei das Verfahren das Mischen einer geringen Menge an Gips, eines Kaolintonerdepigments und zumindest eines Bindematerials umfasst, wobei die Menge an Gips ungefähr 0,1 bis ungefähr 1,0 Gewichtsprozent auf Basis des Gewichts des Trockenpigments beträgt.

13. Verfahren nach Anspruch 12, wobei die Papierbeschichtungszusammensetzung des Weiteren Calciumcarbonat, Titandioxid, Talk oder eine Mischung von zwei oder mehr der Materialien umfasst;
optional wobei das Calciumcarbonat gemahlenes Calciumcarbonat oder präzipitiertes Calciumcarbonat ist.

14. Verfahren nach Anspruch 12, wobei die Menge an Gips 0,15 bis 0,5 Gewichtsprozent auf Basis des Gewichts des Trockenpigments beträgt; optional wobei die Menge an Gips 0,2 bis 0,3 Gewichtsprozent auf Basis des Gewichts des Trockenpigments beträgt.

15. Papier, das mit einer Beschichtungszusammensetzung nach Anspruch 4 beschichtet ist.

16. Beschichtetes Papier nach Anspruch 15, wobei die Beschichtungszusammensetzung des Weiteren Calciumcarbonat, Titandioxid, Talk oder eine Mischung von zwei oder mehr dieser Materialien umfasst;
optional wobei das Calciumcarbonat gemahlenes Calciumcarbonat oder präzipitiertes Calciumcarbonat ist.

17. Beschichtetes Papier nach Anspruch 15;
wobei die Menge an Gips in der Beschichtungszusammensetzung 0,15 bis 0,5 Gewichtsprozent auf Basis des Gewichts des Trockenpigments beträgt; optional wobei die Menge an Gips 0,2 bis 0,3 Gewichtsprozent auf Basis des Gewichts des Trockenpigments beträgt.

## Revendications

1. Pigment de haute brillance, hautement opacifiant et hautement gonflant qui se compose d'argile de kaolin et d'une petite quantité de gypse, dans lequel la quantité de gypse est de l'ordre de 0,1 à 1,0 % en poids par rapport au poids du pigment sec ;
facultativement l'argile de kaolin est l'une quelconque de :
une argile de kaolin hydratée ;
une argile de kaolin calcinée ; ou
un mélange d'argile de kaolin hydratée et d'argile de kaolin calcinée.

2. Pigment tel que défini selon la revendication 1, qui comprend en outre du carbonate de calcium, du dioxyde de titane, du talc ou un mélange de deux de ces substances ou plus ;
facultativement dans lequel le carbonate de calcium est un carbonate de calcium broyé ou un carbonate de calcium précipité.

3. Pigment tel que défini selon la revendication 1,
dans lequel la quantité de gypse est de l'ordre de 0,15 à 0,5 % en poids par rapport au poids du pigment sec ;
facultativement dans lequel la quantité de gypse est de l'ordre de 0,2 à 0,3 % en poids par rapport au poids du pigment sec.

4. Composition de revêtement de papier qui comprend un pigment d'argile de kaolin, une petite quantité de gypse et au moins un matériau de liaison, dans laquelle la quantité de gypse est de l'ordre de 0,1 à 1,0 % en poids par rapport au poids du pigment sec ;
facultativement le pigment se compose de l'un quelconque de :
une argile de kaolin hydratée ;
une argile de kaolin calcinée ; ou
un mélange d'argile de kaolin hydratée et d'argile de kaolin calcinée.

5. Composition de revêtement de papier telle que définie selon la revendication 4, qui comprend en outre du carbonate de calcium, du dioxyde de titane, du talc ou un mélange de deux de ces substances ou plus ;
facultativement dans laquelle le carbonate de calcium est un carbonate de calcium broyé ou un carbonate de calcium précipité.

6. Composition de revêtement de papier telle que définie selon la revendication 4, dans laquelle la quantité de gypse est de l'ordre de 0,15 à 0,5 % en poids par rapport au poids du pigment sec ;
facultativement dans lequel la quantité de gypse est de l'ordre de 0,2 à 0,3 % en poids par rapport au poids du pigment sec.

7. Composition de revêtement de papier telle que définie selon la revendication 4, dans laquelle le matériau de liaison est un amidon, une protéine, un polymère soluble dans l'eau, un latex ou un mélange de deux de ces substances ou plus.

8. Composition de revêtement de papier telle que définie selon la revendication 7, dans laquelle le matériau de liaison est un alcool polyvinylique, un latex de styrène-butadiène, un acétate de polyvinyle, un acrylate de styrène, un acrylonitrile de styrène, ou un mélange de deux de ces substances ou plus.

9. Procédé de fabrication d'un pigment de haute brillance, hautement opacifiant et hautement gonflant selon la revendication 1, le procédé consistant à ajouter une petite quantité de gypse à de l'argile de kaolin, la quantité de gypse étant de l'ordre de 0,1 à 1,0 % en poids par rapport au poids du pigment sec.

10. Procédé tel que défini selon la revendication 9, dans lequel la quantité de gypse est de l'ordre de 0,15 à 0,5 % en poids par rapport au poids du pigment sec ; facultativement dans lequel la quantité de gypse est de l'ordre de 0,2 à 0,3 % en poids par rapport au poids du pigment sec.

11. Procédé tel que défini selon la revendication 9, dans lequel le pigment comprend en outre du carbonate de calcium, du dioxyde de titane, du talc ou un mélange de deux de ces substances ou plus ;
facultativement dans lequel le carbonate de calcium est un carbonate de calcium broyé ou un carbonate de calcium précipité.

12. Procédé de production d'une composition de revêtement de papier selon la revendication 4, le procédé consistant à mélanger une petite quantité de gypse, un pigment d'argile de kaolin et au moins un matériau de liaison, la quantité de gypse étant de l'ordre d'environ 0,1 à environ 1,0 % en poids par rapport au poids du pigment sec.

13. Procédé tel que défini selon la revendication 12, dans lequel la composition de revêtement de papier comprend en outre du carbonate de calcium, du dioxyde de titane, du talc ou un mélange de deux de ces substances ou plus ;
facultativement dans lequel le carbonate de calcium est un carbonate de calcium broyé ou un carbonate de calcium précipité.

14. Procédé tel que défini selon la revendication 12, dans lequel la quantité de gypse est de l'ordre de 0,15 à 0,5 % en poids par rapport au poids du pigment sec ; facultativement dans lequel la quantité de gypse est de l'ordre de 0,2 à 0,3 % en poids par rapport au poids du pigment sec.

15. Papier revêtu d'une composition de revêtement telle que définie selon la revendication 4.

16. Papier revêtu tel que défini selon la revendication 15, dans lequel la composition de revêtement comprend en outre du carbonate de calcium, du dioxyde de titane, du talc ou un mélange de deux de ces substances ou plus ;
facultativement dans lequel le carbonate de calcium est un carbonate de calcium broyé ou un carbonate de calcium précipité.

17. Papier revêtu tel que défini selon la revendication 15, dans lequel la quantité de gypse dans la composition de revêtement est de l'ordre de 0,15 à 0,5 % en poids par rapport au poids du pigment sec ; facultativement dans lequel la quantité de gypse est de l'ordre de 0,2 à 0,3 % en poids par rapport au poids du pigment sec.
